# EUROPEAN PATENT SPECIFICATION

(11) **EP 1 113 993 B1**
(45) Date of publication and mention of the grant of the patent: **10.03.2004**
(21) Application number: 99940906.3
(22) Date of filing: 05.08.1999
(51) Int. Cl.: C01G 45/00, H01M 4/50

(54) **METHOD FOR PRODUCING LITHIUM MANGANESE OXIDE INTERCALATION COMPOUNDS AND COMPOUNDS PRODUCED THEREBY**
VERFAHREN ZUR HERSTELLUNG VON LITHIUMMANGANOXID-INTERKALATIONSVERBINDUNGEN UND HERGESTELLTE VERBINDUNGEN
PROCEDE POUR PRODUIRE DES COMPOSES INTERCALES D'OXYDE DE MANGANESE LITHIE ET COMPOSES OBTENUS PAR CE PROCEDE

(30) Priority: 13.08.1998 US 96353 P
(43) Date of publication of application: 11.07.2001
(73) Proprietor: E.I. DU PONT DE NEMOURS AND COMPANY, Wilmington Delaware 19898 (US)
(72) Inventor: MIAO, Chwen-Chang, Roger, Avondale, PA 19311 (US); TORARDI, Carmine, Wilmington, DE 19810 (US)
(74) Representative: Carpmaels & Ransford
(86) International application number: PCT/US1999/017759
(87) International publication number: WO 2000/009447

(56) References cited:
- EP-A- 0 728 701
- EP-A- 0 734 085
- WO-A-94/26666
- US-A- 5 700 442

## Description

### FIELD OF THE INVENTION

The invention generally relates to a process for producing lithium manganese oxide intercalation compounds and the compounds so produced, which are particularly well-suited to application as electrodes in lithium batteries.

### BACKGROUND OF THE INVENTION

Lithium manganese oxide intercalation compounds have long been known in the art. Spinel LiMn₂O₄ was first identified in D. Wickham and W. Croft, J. Phys. Chem Solids, 7, 351 (1958). One method known in the art for producing LiMn₂O₄ involves the solid state reaction of a lithium salt such as Li₂CO₃ with MnO₂ at temperatures in the range of 700-1100°C. In a typical process for producing LiMn₂O₄, MnO₂ is combined with Li₂CO₃ and reacted at temperatures above 700°C for a period of several hours followed by cooling. A typical reaction process is described by J. C. Hunter in U.S. Patent 4,246,253. The products of such processes can have a wide range of particle sizes dependent on the nature of the starting materials, and reaction temperature and time. Products can also have surface areas ranging from less than 1 m²/g to greater than 5 m²/g.

As discussed by Amatucci, et al., J. Power Sources, **69**, 11-25 (1997), and by Zhong, et al., U.S. Patent 5,700,597 (1997), use of low surface area LiMn₂O₄ as a cathode can be very important in minimizing the rate of self discharge in electrochemical cells by lowering the rates of electrolyte oxidation and manganese dissolution.

Zhong et al. disclose the use of LiCl at temperatures in the range of 400-750°C to form Li₁₊ₓMn₂O₄, in the second step of a multi-step heating process, the Li₁₊ₓMn₂O₄ exhibiting unexpected cycling advantages in lithium battery applications.

Amatucci et al. disclose spinel Li₁₊ₓMn₂O₄ wherein 0<x<1, particularly x=0.05, having a surface area of about 1 m²/g or less. The material of Amatucci et al. provides superior performance in lithium battery applications. The desired surface area is achieved by a sequence of anneals at 800°C, intermittent grindings at room temperature, and a final slow cooling.

Alternatively, Tarascon , WO 94/26666, discloses a lengthy procedure involving heating at 800°C for about 72 hours, cooling to ambient temperature, grinding, and reheating to 800°C. This process is once again repeated to ensure complete reaction of the starting materials.

Oi et al., Japanese Kokai Patent No. Hei 9(1997)-110431, discloses a method for producing a different lithium manganese oxide. LiMnO₂, wherein a lithium compound such as lithium carbonate or oxide is combined with a manganese compound such as manganese carbonate or manganese oxy-hydroxide, the lithium to manganese ratio being in the range of 1:0.2 to 1:5, in the presence of a so-called flux of lithium sulfate, lithium borate, or a mixture thereof, the flux being present in the ratio of 0.25 moles or more per mole of manganese. Heating to 800°C-1100°C for several hours results in the desired product. Oi clearly teaches that in the absence of the flux the spinel LiMn₂O₄ is achieved. Furthermore, a lithium halide flux is not effective for producing LiMnO₂.

What are needed are compounds and methods for making those compounds that do not have the deficiencies or problems of the prior art. Other objects and advantages of the present invention will become apparent to those skilled in the art upon reference to the attached drawings and to the detailed description of the invention which hereinafter follows.

### SUMMARY OF THE INVENTION

The present invention provides for a composition comprising crystallites of spinel Li₁₊ₓMn₂O₄,wherein -.05<x<0.2, the crystallites being characterized as well-shaped octahedra with average maximum crystalline dimension of greater than 2 micrometers, the crystallites being formed into agglomerates having a surface area of less than 1 m²/g.

The present invention further provides for a process for producing spinel Li₁₊ₓMn₂O₄, wherein -0.5<x<0.2, the process comprising
Combining a lithium compound (I) with a manganese compound (II), the mole ratio of Li from (I) to Mn from (II) being in the range of about 9:20 to about 12:20, and a third compound (III), comprising LiCl, whereby the ratio of the sum of the moles of lithium from (I) and the moles of manganese from (II) to the moles of (III) is in the range of about 1:1 to about 100:1, to form a reaction mixture;
Heating the reaction mixture to a temperature in the range of 800-900°C;
Holding the heated reaction mixture at a temperature in the range of 800-900°C until the desired composition and morphology are achieved;
Cooling the heated reaction mixture at a rate no greater than 60°C/hr to a temperature less than about 500°C, followed by cooling to room temperature.

Further provided in the invention is an electrode comprising the Li₁₊ₓMn₂O₄ of the invention.

### BRIEF DESCRIPTION OF THE FIGURES

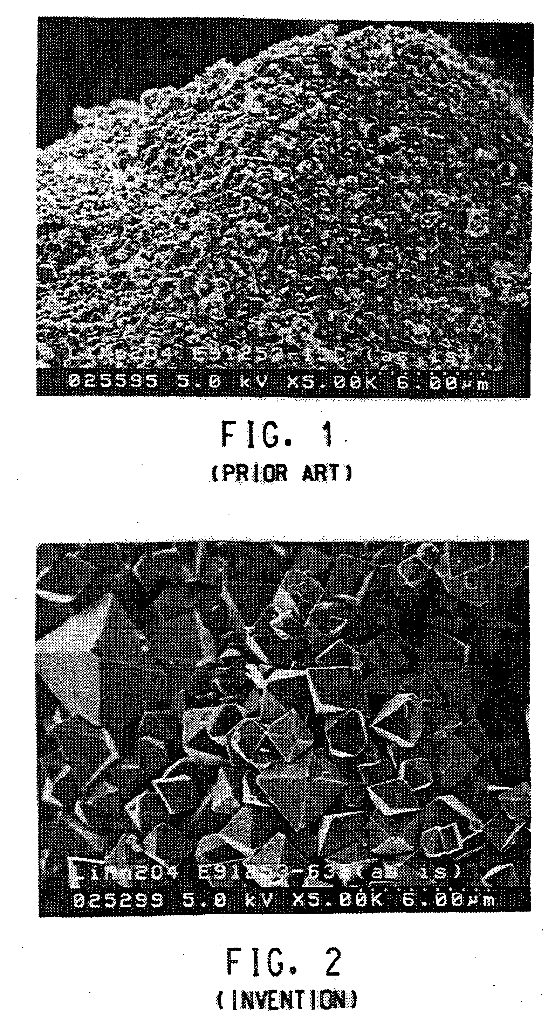

Figures 1 and 2 are photographs illustrating the difference in crystallite size between the prior art and that of the instant invention, respectively.

### DETAILED DESCRIPTION OF THE PREFERRED EMBODIMENTS

The present invention provides for a novel form of Li₁₊ₓMn₂O₄, and a novel process for synthesizing Li₁₊ₓMn₂O₄ in less time than required in the processes of the prior art. The product of the present invention is a lithium intercalation compound wherein the Li:Mn ratio suitable for the invention is in the range of 0.9:2 to 1.2:2, with 1.05:2 being preferred. A value of x<0.2 represents a practical limit on the lithium concentration because at values of x greater than about 0.2 the spinel phase desired for the practice of the present invention begins to transform to Li₂MnO₃.

It will be understood by one of ordinary skill in the art that the formula designation Li₁₊ₓMn₂O₄ represents an approximation to the actual physical structure of the associated lithium intercalation compound. As pointed out by Amatucci et al., op. cit., the actual empirical formula and Mn:O ratio is likely to vary slightly depending upon the value of x and the manner in which the material is formed. The formula employed herein is consistent with common usage in the art.

The Li₁₊ₓMn₂O₄ of the invention occurs as agglomerated crystallites, the agglomerates forming particles characterized as having surface areas in the range of 0.1-1 m²/g as determined by the BET method using nitrogen absorption. When LiCI is employed as at least one component of compound (III) in the process hereinbelow described at a concentration of at least 2% LiCl on the weight of the total composition, the crystallites so formed are characterized by their octahedral habit and average maximum crystalline dimension of greater than 2 micrometers. (see Fig. 2)

The size of the crystallites of the Li₁₊ₓMn₂O₄ of the invention is entirely without precedent in the prior art. Although not bound by this theory,'it is believed by the inventors that the unusually large crystallites of the invention are a result of the previously unknown process of the invention hereinbelow described. In particular, it is believed that compound (III) in the process of the invention acts to greatly accelerate the effects of annealing. Long annealing times are required for the formation of large particles of high purity in the processes of Amatucci et al. or Tarascon, op cit. Further, it is known from Zhong et al. that synthesis of Li₁₊ₓMn₂O₄ with values of x greater than about 0.05 effectively precludes exposure temperatures in excess of 800°C because of the undesired formation of Li₂MnO₃ at those temperatures. In the process of the present invention, however, temperatures of about 900°C can be employed which further accelerates annealing, and concomitantly results in a higher purity product in less time, all with negligible formation of Li₂MnO₃ because the duration of exposure to high temperature is so much shorter than in Amatucci et al. or Tarascon.

In the process of the invention, a lithium compound (I) is combined with a manganese compound (II), the mole ratio of Li from (I) to Mn from (II) being in the range of about 9:20 to about 12:20, and a third compound (III) whereby the ratio of the sum of the moles of lithium from (I) and the moles of manganese from (II) to the moles of (III) is in the range of about 1:1 to about 100:1, to form a reaction mixture.

Compound (I) is selected from the group consisting of lithium salts of organic and inorganic acids and oxyacids, and mixtures thereof; preferably lithium halides, acetates, carbonates, oxyhalides, amides, hydroxide, azide, borate, carbide, and hydride, and mixtures thereof; most preferably Li₂CO₃, LiNO₃, and LiOH, and mixtures thereof.

Compound (II) is selected from the group consisting of manganese salts of organic and inorganic acids and oxyacids, and oxides, and mixtures thereof; preferably manganese oxides, carbonates, halides, hydroxides, sulfates, acetates, nitrates, sulfides and phosphates; most preferably, MnO₂, MnCO₃, and Mn₂O₃, and mixtures thereof.

Compound (III) comprises LiCl preferably compound (III) is LiCl or a mixture of LiCl and Li₂SO₄. Lithium salts are preferred for Compound (III) when the Li₁₊ₓMn₂O₄ formed in the reaction is intended for use in lithium batteries.

The reaction mixture is heated in air to a temperature in the range of 800-900°C and held for a period sufficient for the formation of the spinel product of the desired stoichiometry and surface area. While the optimum heating cycle may vary with choice of reactants, stoichiometry, and compound (III), it has been found generally in the process of the invention that processing temperature in the range of 500-700°C results in higher surface area than does processing in the range of 800-900°C other things being equal. In general, reaction times range from about 2 hours to about 16 hours. Although shorter reaction times are feasible at the lower reaction temperatures in order to form the higher surface area products, it is not necessary that the times be held that short. The formation of impurities by competing reactions is more aggravated at higher temperature than at lower temperature.

In the preferred process of the invention, the reaction mixture is heated in air to a temperature of about 850°C and held for about 8 hours, then heated to 900°C and held an additional about 8 hours followed by cooling to 500°C at a rate of no more than about 60°C/hr, followed, in turn, by cooling to about room temperature. Preferably, the rate of cooling is about 10°C/hr. or less.

The cooled product may then be washed primarily to remove residual compound (III). However, in the most preferred embodiment of the invention, wherein about 2% by weight of LiCl is employed as compound (III), it is believed that some or all of the lithium moiety of compound(III) is incorporated into the product while the associated chlorine moiety is vaporized thus leaving negligible residue and obviating the need for washing.

It has been observed in the practice of the invention that the employment of compound (III) results in a cleaner (i.e., more fully reacted) product at a lower temperature than can be achieved with a given composition at the same temperature absent compound (III). This is even true for the smallest concentration of compound (III) suitable for the practice of the invention. That is to say, the processes of the prior art, all of which omit compound (III), always require a higher temperature and/or greater time to achieve the same result as the process of the present invention.

Purity of the product is thought to influence the performance of the Li₁₊ₓMn₂O₄ of the invention in electrochemical applications where excess "dead" weight is undesirable, and unwanted side reactions of contaminants can degrade performance. The process of the present invention is highly effective at producing a single phase product under highly favorable conditions compared to the prior art, either in shorter cycles or at lower temperatures, or both. Purity is normally determined by x-ray powder diffraction, using techniques well-known in the art. The products of the process of the present invention exhibit only the characteristic x-ray powder diffraction pattern of Li₁₊ₓMn₂O₄.

The Li₁₊ₓMn₂O₄ product of the process of the invention occurs as agglomerated crystallites, the agglomerates forming particles characterized as having surface areas in the range of 0.1-20 m²/g.

In a preferred embodiment of the process of the present invention 1 part by mole of Li₂CO₃ is combined with about 3.8 parts of MnO₂ and about 0.1 to about 2 parts, most preferably about 0.1 to about 0.2 parts of Li in the form of LiCl. It has been found that at least some of the LiCl is consumed in the reaction, possibly altering the stoichiometry.

It is further observed in the process of the invention that the process of the invention using LiCl-containing compound (III) at reaction temperature of 800-900°C, where LiCl is present in levels of about 2% by weight or greater, results in larger crystallites than those obtained by the processes of the prior art.

In a surprising aspect of the present invention, it has been found that incorporation of as little as 2 weight % of LiCl or the eutectic mixture of LiCl and Li₂SO₄ in the reaction mixture permits the synthesis of a product of equivalent composition and surface area to that of Amatucci et al., op cit, having. distinctive crystallites in a much simpler thermal treatment cycle. A preferred thermal treatment cycle of the invention comprises the following steps:
a) Heating to about 850°C at a rate of about 4.5°/min and holding for 8 hours
b) Heating to 900°C at a rate of about 1.5°/min and holding for 8 hours
c) Cooling at a rate of about 0.1-1°/min to 500°C
d) Allowing to cool to room temperature.

The resultant product is characterized by a surface area <1 m²/g, and x = about 0.05. When LiCl is present at levels of 2% by weight or greater the resulting product is further characterized as agglomerated crystallites, the crystallites being well-defined octahedra having an average maximum crystalline dimension of greater than 2 micrometers.

It has been found in the practice of the invention that the choice of compound (III) has a very large effect on the surface area of the resulting product. This is shown in particular hereinbelow in Examples 10 and 11. As presently contemplated. LiCl is preferred. More generally, it should be borne in mind by the practitioner of the instant invention that individual compound (III) exerts a particular influence on surface area and crystallite size, and that when compound (III) is combined, the results may not be predictable.

The product produced in the process of the invention is particularly suitable for use as an electroactive material in the cathode of a lithium or lithium ion battery. For such applications, preferably x is about 0:05, and the surface area of the Li₁₊ₓMn₂O₄ less than 1.0 m²/g, most preferably about 0.7 m²/g. In a preferred manner found suitable for the practice of the invention, a composition is formed comprising Li₁₊ₓMn₂O₄, and a binder, the composition formed into a shaped article, preferably a film or sheet, most preferably a sheet having a thickness of 250 micrometers or less, the shaped article being useful as a cathode in an electrochemical cell.

Suitable binders include EPDM rubber, polyvinylidene fluoride, and copolymers thereof, polytetrafluoroethylene and copolymers thereof, the binders being present at up to 50% by weight, preferably up to 20%. Preferably, the composition contains about 5% of a conductive carbon black. An electrode further comprises an electrolyte.

### EXAMPLES

The invention is further illustrated by the following non-limiting examples set forth hereinbelow.

### EXAMPLES 1-3 AND COMPARATIVE EXAMPLE 1

The benefit of using even low compound (III) levels (2% by weight), is discussed It is also demonstrated that these compounds (III) are beneficial on a larger production scale.

The compositions formed in Examples 1-3 and Comparative Example 1 are shown in Table 1 below.

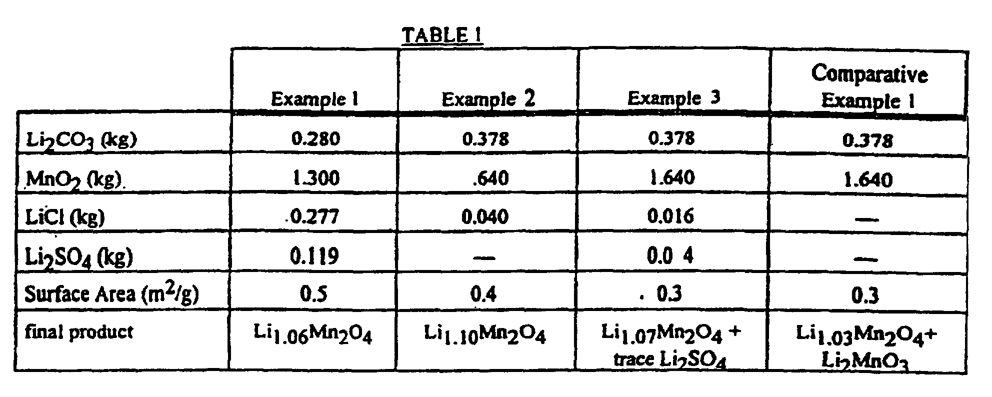

The compositions were mixed by shaking in polyethylene containers for 30 minutes, and each mixture was transferred to an uncovered alumina crucible. The mixtures were processed in air as follows: heated to 850°C over a 3 hour period, held at 850°C for 8 hours, heated to 900°C over a 30 minute period, held at 900°C for 8 hours, and slowly cooled at a rate of 1°/min to 500°C. At this point, the power was turned off, and the furnace cooled naturally to room temperature. In each case, the product formed after reaction was Li₁₊ₓMn₂O₄ as shown in Table 1.

The reaction product of Example 1 only was washed with water and dried. The products of Examples 1-3 were shown by XPD analyses to be free of impurities, except for the presence of Li₂SO₄ in Example 3 because it had not been washed out. In contrast, the reaction product of Comparative Example 1 was shown by XPD to contain Li₂MnO₃ in addition to the desired material. The surface areas of the reaction products are also shown in Table 1.

### EXAMPLE 4 AND COMPARATIVE EXAMPLE 2

This example illustrates the benefit of employing a compound (III) with different starting materials, LiNO₃ and MnCO₃.

To form the reaction mixture of Example 4, 4.4000 g LiNO₃, 15.0000 g MnCO₃, 3.4 g LiCl, and 1.45 g Li₂SO₄ were combined and shaken in a glass jar and placed in an uncovered circular alumina dish. The reaction mixture of Comparative Example 2 was prepared in a manner identical to that of Example 4 except that the LiCl and Li₂SO₄ were omitted. Both reactions were performed by heating in air to 600°C over a 2 hour period, holding at this temperature for 4 hours, and finally allowing the furnace to cool to room temperature. The reaction product of Example 4 was washed with water and dried under a heat lamp. The surface areas for the reaction products of Example 4 and Comparative Example 2, measured by nitrogen BET, were 9.0 and 11.4 m²/g, respectively. The X-ray powder diffraction pattern of the reaction product of Example 4 confirmed that it was clean by showing only the lines of the cubic spinel Li_{1.05}Mn₂O₄ structure. In clear contrast, the product of the no-compound (III) reaction showed the presence of Mn₂O₃ in addition to the Li₁₊ₓMn₂O₄.

### EXAMPLES 5 AND 6

This example shows that Li₁₊ₓMn₂O₄ derived from high and low levels of compound (III), i.e., 25% and 2% by weight, have good electrochemical performance as cathodes in rechargeable lithium cells.

In Example 5, 4.00 g of Li₁₊ₓMn₂O₄, synthesized as in Example 2, was combined with 0.215 g of Super P carbon black commercially available from MMM S.A. Carbon, Brussels, Belgium, and 2.5 ml of a 4 wt % solution of EPDM rubber in cyclohexane. Extra cyclohexane was added to improve flow. The mixture was shaken in a capped glass vial for 15 min. on a mechanical shaker. The resultant slurry was cast onto a sheet of Teflon® FEP and drawn down to form a film using a doctor blade having a 10 mil gap. The dried film was hot-pressed in a roller between Kapton® sheets at 2000 psi and 110°C to form a consolidated sheet suitable for use as a cathode in a lithium battery. The thickness of the sheet was 115 micrometers.

In Example 6, the Li₁₊ₓMn₂O₄ synthesized as in Example 1 was formed into a cathode sheet 80 micrometers thick in a manner identical to that in Example 5.

The resultant consolidated sheets were employed as cathodes against Li metal anodes in electrochemical cells. LiPF₆ in EC/DMC (ethylene carbonate/dimethyl carbonate) served as the electrolyte. Porous polyethylene or glass fiber separators were used between the electrodes. Disks of cathode, anode, and separator were cut with punches. The cathode and separator pieces were soaked in electrolyte solution, then stacked along with the Li into a coin-cell pan and sealed under pressure using the 2325 Coin Cell Crimper System manufactured by the National Research Council Canada.

Both cathodes had good capacity and reversible fraction as shown in Table 2 below.

**TABLE 2**

| Example | x in Li₁₊ₓMn₂O₄ | Temp(°C) | Capacity (mAh/g) | Reversible Fraction (%) |
|---|---|---|---|---|
| 5 | 0.06 | 25 | 121.4 | 91.7 |
| 6 | 0.05 | 25 | 121.2 | 92.0 |

Although particular embodiments of the present invention have been described in the foregoing description, it will be understood by those skilled in the art that the invention is capable of numerous modifications, substitutions and rearrangements without departing from the spirit or essential attributes of the invention. Reference should be made to the appended claims, rather than to the foregoing specification, as indicating the scope of the invention.

## Claims

1. A composition comprising crystallites of spinel Li₁₊ₓMn₂O₄,wherein -0.5<x<0.2, the crystallites being characterized as well-shaped octahedra with average maximum crystalline dimension of greater than 2 micrometers, the crystallites formed into agglomerates having a surface area of less than 1 m²/g.

2. A process for producing spinel crystallites of Li₁₊ₓMn₂O₄, wherein -0.5<w<0.2, the crystallites being characterized as well-shaped octahedra with average maximum crystalline dimension of greater than 2 micrometers, the crystallites formed into agglomerates having a surface area of less than 1 m²/g, the process comprising:
Combining a lithium compound (I) with a manganese compound (II) the mole ratio of Li from (I) to Mn from (II) being in the range of about 9:20 to about 12:20, and a third compound (III) comprising LiCl, whereby the ratio of the sum of the moles of lithium from (I) and the moles of manganese from (II) to the moles of LiCl is in the range of about 1:1 to about 100:1, to form a reaction mixture;
Heating the reaction mixture to a temperature in the range of 800-900°C;
Holding the heated reaction mixture at a temperature in the range of 800-900°C until the desired composition and morphology are achieved;
Cooling the heated reaction mixture at a rate no greater than 60°C/hr to a temperature less than about 500°C, followed by cooling to room temperature.

3. The process of Claim 2 wherein the reaction mixture is heated to about 850°C, followed by holding at about 850°C for about 8 hours, followed by heating to about 900°C followed by holding at about 900°C for about 8 hours.

4. The process of Claim 2 wherein the rate of cooling to 500°C is 10°C/hr or slower.

5. The composition of Claim 1 wherein x is about 0.05.

6. The process of Claim 2 wherein the Li:Mn mole ratio is about 1:1.9.

7. The process of Claim 2 wherein the lithium compound is selected from the group consisting of lithium salts of organic and inorganic acids and oxyacids, and mixtures thereof.

8. The process of Claim 2 wherein the lithium compound is selected from the group consisting of lithium halides, acetates, carbonates, oxyhalides, amides, hydroxide, azide, borate, carbide, and hydride, and mixtures thereof.

9. The process of Claim 2 wherein the lithium compound is selected from the group consisting of Li₂CO₃, LiNO₃, and LiOH , and mixtures thereof.

10. The process of Claim 2 wherein the manganese compound is selected from the group consisting of manganese salts of organic and inorganic acids and oxyacids, and oxides, and mixtures thereof.

11. The process of Claim 2 wherein the manganese compound is selected from the group consisting of manganese oxides, carbonates, halides, hydroxides, sulfates, acetates, nitrates, sulfides and phosphates, and mixtures thereof.

12. The process of Claim 2 wherein the manganese compound is selected from the group consisting of MnO₂, MnCO₃, and Mn₂O₃, and mixtures thereof.

13. The process of Claim 2 further comprising the step of washing the reacted product thereof.

14. An electrode comprising the composition of Claim 1.

15. An electrochemical cell comprising the electrode of Claim 14.

16. The electrode of Claim 14 further comprising a binder.

17. The electrode of Claim 16 further comprising carbon black.

## Patentansprüche

1. Zusammensetzung, aufweisend Kristallite eines Spinells von Li₁₊ₓMn₂O₄, worin - 0,5<x<0,2 gilt und die Kristallite als gut ausgebildete Oktaeder mit einer mittleren maximalen Kristallabmessung größer als 2 Mikrometer gekennzeichnet sind und die Kristallite zu Agglomeraten mit einer Oberfläche kleiner als 1 m²/g geformt sind.

2. Verfahren zum Herstellen von Spinellkristalliten von Li₁₊ₓMn₂O₄, worin - 0,5<x<0,2 gilt und die Kristallite als gut ausgebildete Oktaeder mit einer mittleren maximalen Kristallabmessung größer als 2 Mikrometer gekennzeichnet sind und die Kristallite zu Agglomeraten mit einer Oberfläche von kleiner als 1 m²/g geformt sind, welches Verfahren umfasst:
Vereinigen einer Lithiumverbindung (I) mit einer Manganverbindung (II), wobei das Molverhältnis von Li von (I) zu Mn von (II) im Bereich von etwa 9:20 bis etwa 12:20 liegt; und einer dritten Verbindung (III), die LiCl aufweist, wobei das Verhältnis der Summe der Mole von Lithium aus (I) und der Mole von Mangan aus (II) zu den Molen von LiCl im Bereich von etwa 1:1 bis etwa 100:1 liegt, um ein Reaktionsgemisch zu bilden;
Erhitzen des Reaktionsgemisches bis zu einer Temperatur im Bereich von 800° bis 900°C;
Halten des erhitzten Reaktionsgemisches bei einer Temperatur im Bereich von 800° bis 900°C, bis die gewünschte Zusammensetzung und Morphologie erreicht sind;
Kühlen des erhitzten Reaktionsgemisches bei einer Geschwindigkeit nicht größer als 60°C/h bis zu einer Temperatur von kleiner als etwa 500°C, gefolgt von einem Kühlen bis Raumtemperatur.

3. Verfahren nach Anspruch 2, bei welchem das Reaktionsgemisch bis etwa 850°C erhitzt wird, gefolgt von einem Halten bei etwa 850°C für etwa 8 Stunden, gefolgt von einem Erhitzen bis etwa 900°C, gefolgt von einem Halten bei etwa 900°C für etwa 8 Stunden.

4. Verfahren nach Anspruch 2, bei welchem die Geschwindigkeit des Kühlens bis 500°C 10°C/h oder langsamer beträgt.

5. Zusammensetzung nach Anspruch 1, bei welcher x etwa 0,05 beträgt.

6. Verfahren nach Anspruch 2, bei welcher das Li:Mn-Molverhältnis etwa 1:1,9 beträgt.

7. Verfahren nach Anspruch 2, bei welchem die Lithiumverbindung ausgewählt wird aus der Gruppe, bestehend aus Lithiumsalzen organischer und anorganischer Säuren und Oxysäuren sowie Mischungen davon.

8. Verfahren nach Anspruch 2, bei welchem die Lithiumverbindung ausgewählt wird aus der Gruppe, bestehend aus: Lithiumhalogeniden, -acetaten, -carbonaten, - oxyhalogeniden, -amiden, -hydroxid, -azid, -borat, -carbid und -hydrid sowie Mischungen davon.

9. Verfahren nach Anspruch 2, bei welchem die Lithiumverbindung ausgewählt wird aus der Gruppe, bestehend aus Li₂CO₃, LiNO₃ und LiOH und Mischungen davon.

10. Verfahren nach Anspruch 2, bei welchem die Manganverbindung ausgewählt wird aus der Gruppe, bestehend aus Mangansalzen organischer und anorganischer Säuren und Oxysäuren sowie Oxiden und Mischungen davon.

11. Verfahren nach Anspruch 2, bei welchem die Manganverbindung ausgewählt wird aus der Gruppe, bestehend aus Manganoxiden, -carbonaten, -halogeniden, -hydroxiden, -sulfaten, -acetaten, -nitraten, -sulfiden und -phosphaten sowie Mischungen davon.

12. Verfahren nach Anspruch 2, bei welchem die Manganverbindung ausgewählt wird aus der Gruppe, bestehend aus: MnO₂, MnCO₃ und Mn₂O₃ und Mischungen davon.

13. Verfahren nach Anspruch 2, ferner aufweisend den Schritt des Waschens des umgesetzten Produktes davon.

14. Elektrode, aufweisend die Zusammensetzung nach Anspruch 1.

15. Elektrochemische Zelle, aufweisend die Elektrode nach Anspruch 14.

16. Elektrode nach Anspruch 14, ferner aufweisend ein Bindemittel.

17. Elektrode nach Anspruch 16, ferner aufweisend Carbon-Black.

## Revendications

1. Composition comprenant des cristallites de spinelle Li₁₊ₓMn₂O₄, où -0,5 < x < 0,2, les cristallites étant caractérisées comme des octaèdres bien formés avec une dimension cristalline maximum moyenne supérieure à 2 micromètres, les cristallites formées en agglomérats présentant une surface spécifique inférieure à 1 m²/g.

2. Procédé pour la production de cristallites spinelle de Li₁₊ₓMn₂O₄, où -0,5 < x < 0,2, les cristallites étant caractérisées comme des octaèdres bien formés avec une dimension cristalline maximum moyenne supérieure à 2 micromètres, les cristallites formées en agglomérats présentant une surface spécifique inférieure à 1 m²/g, le procédé comprenant:
la combinaison d'un composé de lithium (I) avec un composé de manganèse (II), le rapport molaire de Li issu de (I) sur Mn issu de (II) étant dans l'intervalle d'environ 9:20 à environ 12:20, et d'un troisième composé (III) comprenant LiCl, en conséquence de quoi le rapport de la somme des moles de lithium issu de (I) et des moles de manganèse issu de (II) sur les moles de LiCl est dans l'intervalle d'environ 1:1 à environ 100:1, pour former un mélange réactionnel;
le chauffage du mélange réactionnel à une température dans l'intervalle de 800-900°C;
le maintien du mélange réactionnel chauffé à une température dans l'intervalle de 800-900°C jusqu'à ce que la composition et la morphologie désirées soient obtenues;
le refroidissement du mélange réactionnel chauffé à une vitesse ne dépassant pas 60°C/h jusqu'à une température inférieure à environ 500°C, suivi par le refroidissement à la température ambiante.

3. Procédé suivant la revendication 2, dans lequel le mélange réactionnel est chauffé à environ 850°C, suivi par un maintien à environ 850°C pendant environ 8 heures, suivi par un chauffage à environ 900°C, suivi par un maintien à environ 900°C pendant environ 8 heures.

4. Procédé suivant la revendication 2, dans lequel la vitesse de refroidissement jusqu'à 500°C est inférieure ou égale à 10°C/h.

5. Composition suivant la revendication 1, dans laquelle x est environ 0,05.

6. Procédé suivant la revendication 2, dans lequel le rapport molaire Li:Mn est environ 1:1,9.

7. Procédé suivant la revendication 2, dans lequel le composé de lithium est choisi dans le groupe constitué de sels de lithium d'acides et d'oxyacides organiques et inorganiques et de mélanges de ceux-ci.

8. Procédé suivant la revendication 2, dans lequel le composé de lithium est choisi dans le groupe constitué d'halogénures, d'acétates, de carbonates, d'oxyhalogénures, d'amides, d'hydroxyde, d'azide, de borate, de carbure et d'hydrure de lithium et de mélanges de ceux-ci.

9. Procédé suivant la revendication 2, dans lequel le composé de lithium est choisi dans le groupe constitué de Li₂CO₃, de LiNO₃ et de LiOH et de mélanges de ceux-ci.

10. Procédé suivant la revendication 2, dans lequel le composé de manganèse est choisi dans le groupe constitué de sels de manganèse d'acides et d'oxyacides organiques et inorganiques et d'oxydes et de mélanges de ceux-ci.

11. Procédé suivant la revendication 2, dans lequel le composé de manganèse est choisi dans le groupe constitué d'oxydes, de carbonates, d'halogénures, d'hydroxydes, de sulfates, d'acétates, de nitrates, de sulfures et de phosphates de manganèse et de mélanges de ceux-ci.

12. Procédé suivant la revendication 2, dans lequel le composé de manganèse est choisi dans le groupe constitué de MnO₂, de MnCO₃ et de Mn₂O₃ et de mélanges de ceux-ci.

13. Procédé suivant la revendication 2, comprenant en outre l'étape de lavage du produit ayant réagi de celui-ci.

14. Electrode comprenant la composition suivant la revendication 1.

15. Cellule électrochimique comprenant l'électrode suivant la revendication 14.

16. Electrode suivant la revendication 14, comprenant en outre un liant.

17. Electrode suivant la revendication 16, comprenant en outre du noir de carbone.
